# EUROPEAN PATENT APPLICATION

(11) **EP 1 583 029 A1**
(43) Date of publication of application: **05.10.2005**
(21) Application number: 05290706.0
(22) Date of filing: 30.03.2005
(51) Int. Cl.: G06K 19/077, E05B 73/00

(54) **Information recording member resin-enclosed tag and its manufacturing method**

(30) Priority: 31.03.2004 JP 2004130437
(71) Applicant: Satoh Gosei Co., Ltd., Tokyo 173-0034 (JP)
(72) Inventor: Satoh, Akira, c/o Satoh Gosei Co., Ltd., Tokyo 173-0034 (JP); Sato, Shin-ichi, c/o SG Industrial Co., Ltd., Tokyo 174-0074 (JP)
(74) Representative: Plaçais, Jean Yves

(57) **Abstract**

Providing an information recording member resinenclosed tag and its manufacturing method, which can form various types of tags instead of an conventional information recording member, expand a variety of choices available to attaching methods for the articles to be attached, and moreover prevent the information recording member from being affected by dirt etc. The tag has a resin substrate provided with at least an information recording member, and an outer packaging body formed by an injection molding using a resin to be fusion-bonded to the substrate, wherein the information recording member is covered with the substrate and the outer packaging body. A method of manufacturing the information recording member resin-enclosed tag comprises: a first step of forming a substrate in advance by a resin; a second step of disposing at least an information recording member on the substrate; a third step of disposing the substrate provided with the information recording member, inside a cavity of a die which shapes an outer packaging body for covering the information recording member by an injection molding; and a fourth step of making a fusible resin fusion-bonded to the substrate flow in the cavity to form an outer packaging body covering the information recording member.

## Description

### BACKGROUND OF THE INVENTION

The present invention relates to an information recording member resin-enclosed tag and its manufacturing method, which forms a tag by enclosing in a resin a film or substrate on which an IC tag, a two-dimensional bar code, a one-dimensional bar code, and a character record, etc. are disposed, and, more particularly, to an information recording member resin-enclosed tag and its manufacturing method, which is capable of providing various shaped tags by making a resin material for enclosing the film or substrate flow in a die by an injection molding.

In recent years, instead of the bar code in widespread use, a recognition technique by radio communication, which is called a RFID (Radio Frequency Identification), has been attracting public attention.

This technique is a technique for recording or reading data in an IC chip incorporated into a medium such as a card, a tag or the like by using an electric wave and the like, and for gaining recognition by radio communication through an antenna.

The reason why this technique attracts public attention is that: an amount of information which can be stored is extremely much in comparison with the bar code; since the radio communication is established, communication distance used for the technique is much longer than that used for an almost contact-type media such as a bar cord; as compared with the case where the bar code must individually perform a communication processing, the RFID can collectively perform the communication processing; traceability from manufacturing to consumption of the product is possible; and the like. Effects obtained from such a reason are immeasurable and there is such a situation that each field has begun studying the introduction of the RFID early on.

However, the present situation is such that, though the introduction of the RFID has been under consideration at each field, the number of introduction examples is extremely few and, at the current movement, a research and/or a market experiment have been conducted partially or are still at an early stage of planning.

This is for the following reasons. Namely, since the RFID is a new technique, it is not yet decided how the IC tags are attached to commodities or various types of articles. In addition, since the cost of the IC tag goes up, the tags can be used somehow for luxurious articles. However, except such articles, the situation is such that the tags cannot be introduced due to the cost.

Thus, the IC tag is constituted so that an IC chip is attached to a thin resin film or a substrate thicker than the resin film and an antenna, and a condenser, etc. are disposed around the chip so as to be linked to the IC chip. In order to protect these elements, protective resin films are press-bonded to both faces of the film or substrate by a thermal press to be formed in a plate shape and, after being cooled down, the film or substrate provided with the protective resin films is punched out in a rectangular shape by a punching press, whereby an IC card is formed generally (see Patent Document: Japanese Patent Laid-open No. 11-99781).

Meanwhile, the one-dimensional bar code currently in widespread use, the second-dimensional code capable of recording the information amount ten to hundred times more than that of the one-dimensional bar code, the character record, and the like (hereinafter referred to as "code and character records") read information contents optically or visually. These code and character records etc. are printed on paper and/or a resin film and its rear side is provided with an adhesive agent, so that such records are used by being attached to a packaging film of the commodity etc.

### SUMMARY OF THE INVENTION

As described above, the IC tag is formed, by press-bonding the protective resin films to both faces of the film or substrate by the thermal press so as to be formed in a plate shape and punching out the plate, and, after being cooled down, the IC card is shaped by punching out the plate in a rectangular shape through the punching press. Further, since the code and character records are designed to be attached to the packaging film of the commodity and the like, the shape of the records is currently limited to a film or card.

Consequently, to attach the IC tag and/or the code and character records to a material body such as a commodity, only means available are to bond the IC tag and/or the code and character records to the body with them remaining in a state of the card or film or to form a hole in them to bond them to the body by lacing a string-shaped coupling member etc. through the hole. In the case of the IC tag as described above, the following problems remain unsolved. That is, though the technique of the IC tag itself is established, no attaching means are decided as yet. Moreover, since a raw material for the code and character records is paper or a resin film, attachment of the code and character records to a material body is mainly made by adhesion etc., so that it is not determined how to attach the IC tag to a material body not to be bonded or not to be attached by a string-shaped coupling member etc.

Further, in the case of the code and character records, even at the present time when they are commonly used, particularly if the raw material is paper, the problem remains unsolved such that the records cannot be read optically due to the paper stained with dirt or that the printed portions of the cord and character records cannot be read due to their unclear display.

Hence, an object of the present invention is to provide an information recording member resin-enclosed tag and its manufacturing method, which can form various types of tags instead of an conventional information recording member limited to a card or film shape, expand a variety of choices available to the attaching methods for articles to be attached, and moreover prevent the information recording member from being affected by dirt etc.

To achieve the above-described object in the present invention, the following solutions will be used.

That is, a first solution is to provide an information recording member resin-enclosed tag, which is characterized by: a resin substrate provided with at least an information recording member; and an outer packaging body formed by an injection molding using a resin to be fusion-bonded to the substrate, wherein the information recording member is covered with the substrate and the outer packaging body.

Note that a second solution is to add, to the first solution, a constitution in which a portion of an outer packaging surface of the outer packaging body is replaced by one surface of the substrate and the information recording member is disposed on the other surface of the substrate.

Also, a third solution is to add, to each of the first and second solutions, a constitution in which the information recording member is formed in a film shape.

Further, a fourth solution is to add, to each of the first to third solutions, a constitution in which the information recording member is attached to the substrate by an adhesive agent.

Further, a fifth solution is to add, to each of the first to fourth solutions, a constitution in which the substrate and the outer packing body are formed by a resin of the same type of material.

Further, a sixth solution is to add, to each of the first to fifth solutions, a constitution in which a hole for penetrating the outer packaging body is provided in the vicinity of the information recording member and an enclosed-tag attaching body having a collar formed in one end portion and a arrow-head-shaped stopping portion formed on the other end side is attached in a state of being fitted into the hole.

Further, a seventh solution is to add, to the sixth solution, a constitution in which wherein the information recording member is disposed in an outer peripheral portion and a hole for being attached in a state of being fitted into the enclosed-tag attaching body is provided inside the information recording member.

Meanwhile, for a method of manufacturing the above-mentioned information recording member resin-enclosed tag, a method of manufacturing an information recording member resin-enclosed tag, which comprises a first step of forming a substrate in advance by a resin, a second step of disposing at least an information recording member on the substrate, a third step of disposing the substrate provided with the information recording member, inside a cavity of a die which shapes an outer packaging body for covering the information recording member by an injection molding, and a fourth step of making a fusible resin fusion-bonded to said substrate flow in said cavity to form an outer packaging body covering the information recording member, is provided as an eighth solution.

Note that a ninth solution is provided by adding, to the eighth solution, a process in which, in the third step in the eight solution, a surface of a side opposite to the information recording member in the substrate provided with the information recording member is brought into contact with a cavity surface of the die.

Also, a tenth solution is provided by adding, to each of the eight and ninth solutions, a process in which, in the third step in the eighth solution, a surface of a side opposite to the information recording member in the substrate provided with the information recording member is pressure-contacted with a cavity surface of the die.

Further, an eleventh solution is provided by adding, to each of the eighth to tenth solutions, a process in which, in the second step in the eighth solution, the information recording member is attached to the substrate by an adhesive agent.

The operation by the first or eighth solution is as follows.

When the information recording member disposed in the substrate is covered with the fusible resin (resin for forming the outer packaging body) that is made to flow in the die cavity by an injection molding, the fusible resin contacting with the substrate melts the substrate by heat, whereby the outer packaging body and the substrate are fusion-bonded to each other. Therefore, in a state in which a disposed position of the information recording member is kept, the information recording member can be enclosed into the outer packaging body.

Consequently, without being limited to a card type and/or a film shape as used conventionally, various shapes of tags can be formed, and choices available to methods of attachment to bodies to be attached can be expanded.

The operation by the second, ninth or tenth solution is as follows.

The substrate is brought into contact with the cavity surface of the die and, in a state in which the information recording member is disposed on the substrate facing a side opposite to such a contact surface, when the fusible resin for forming the outer packaging body is made to flow in the die cavity, the fusible resin is mainly filled into the cavity of the information recording member side of the substrate, so that a portion of the fusible resin is fusion-bonded to the substrate. That is, the information recording member is enclosed in a state of being sandwiched between the substrate and the outer packaging body. As a result, even when an external force by inflow of the fusible resin is exerted on the substrate, the deformation can be prevented since the substrate contacts with the die cavity. In other words, even if the substrate is thin, the injection molding can be executed, so that the entire tag including the information recording member can be formed thinly. Note that when the cavity surface of the die is press-contacted with the substrate, a deformation-preventive effect of the substrate becomes further remarkable and, concurrently, since the fusible resin does not infiltrate between the substrate and the cavity surface press-contacted by the substrate, an appearance of the outer packaging body can be made better.

The operation by the third solution is as follows.

In addition to the operation and effect of each of the above-mentioned solutions, by forming the information recording member into a film shape, flow resistance of the fusible resin can be reduced and, concurrently, the information recording member can be formed by printing etc. Therefore, the members can be produced at low cost.

The operation by the fourth or eleventh solution is as follows.

When the information recording member is attached to the substrate by an adhesive agent, the adhering effect of the information recording member and the substrate can be enhanced due to the heat of the fusible resin, which simplifies a step of disposing the information recording member in the substrate. Therefore, a mass production can be executed.

The operation by the fifth solution is as follows.

When the substrate and the outer packaging body are formed by the resin of the same type of material, the fusion-bonding effect of the substrate and the outer packaging body can be enhanced, whereby the information member can be enclosed certainly.

The operation by the sixth solution is as follows.

By inserting the enclosed-tag attaching member into an article to be attached to the tag, the information recording member resin-enclosed tag can be quickly and simply attached and, concurrently, the information recording member resin-enclosed tag after use can be recovered by performing cutting and the like of the enclosed-tag attaching member. This leads to an effect on spread and promotion of the IC tag since a leakage of secret information of the information recording member into the outside can be prevented and the information recording member can be reused and is expensive particularly in the case of the IC tag capable of rewriting the information.

The operation by the seventh solution is as follows.

By setting an engaging position of the enclosed-tag attaching member inside the information recording member, the entire member can be formed in a compact shape in comparison with the sixth solution. Therefore, the information recording member resin-enclosed tag has an advantage of being used also for information control of the small animals etc.

As described above, the present invention can enclose the information recording member into the outer packaging body and be shaped by the injection molding, so that the tags of various shapes can be manufactured. Consequently, The present invention has an effect in which the choices available to the attaching methods to the articles to be attached can be expanded and moreover the information recording member is not affected by dirt etc.

Note that meanings of the terms used in the present invention are defined as follows. However, terms not defined here will be treated as the terms having prevailing meanings.

The term "information recording member" means a recording member, such as character information, a one-dimensional bar code, a two-dimensional code, or an IC tag, which can exchange information by one-way or two-way communication in a visual, optical, electric-wave, electromagnetic-conduction, or magnetic-force manner.

The term "resin" means a resin capable of injection molding and of being fusion-bonded even if the resin materials are not only the same but also different.

### BRIEF DESCRIPTION OF THE DRAWINGS

FIG. 1 is a partially-sectioned front view of an information recording member resin-enclosed tag showing an embodiment of the present invention.
FIG. 2 is a sectional view taken along the line A-A of FIG. 1.
FIG. 3 is an enlarged sectional view taken along the line B-B of FIG. 1.
FIG. 4 is a perspective view for explaining a manufacturing method for the information recording member resin-enclosed tag showing the embodiment of the present invention.
FIG. 5 is a front view for explaining an application example of the information recording member resin-enclosed tag showing the embodiment.
FIG. 6 is a partially-sectioned bottom view of FIG. 5.
FIG. 7 is a perspective view for explaining application modes of FIGs. 5 and 6.
FIG. 8 is an enlarged front view for explaining a boss portion of FIG. 5.
FIG. 9 is a front view showing another application example of the present invention.
FIG. 10 is a sectional view of FIG. 9.
FIG. 11 is a front view showing another application example of the present invention.
FIG. 12 is a sectional view of FIG. 11.
FIG. 13 is a perspective view for explaining another application example of the present invention.
FIG. 14 is a front view showing another application example of the present invention.
FIG. 15 is a sectional view of FIG. 14.

### DESCRIPTION OF THE PREFERRED EMBODIMENTS

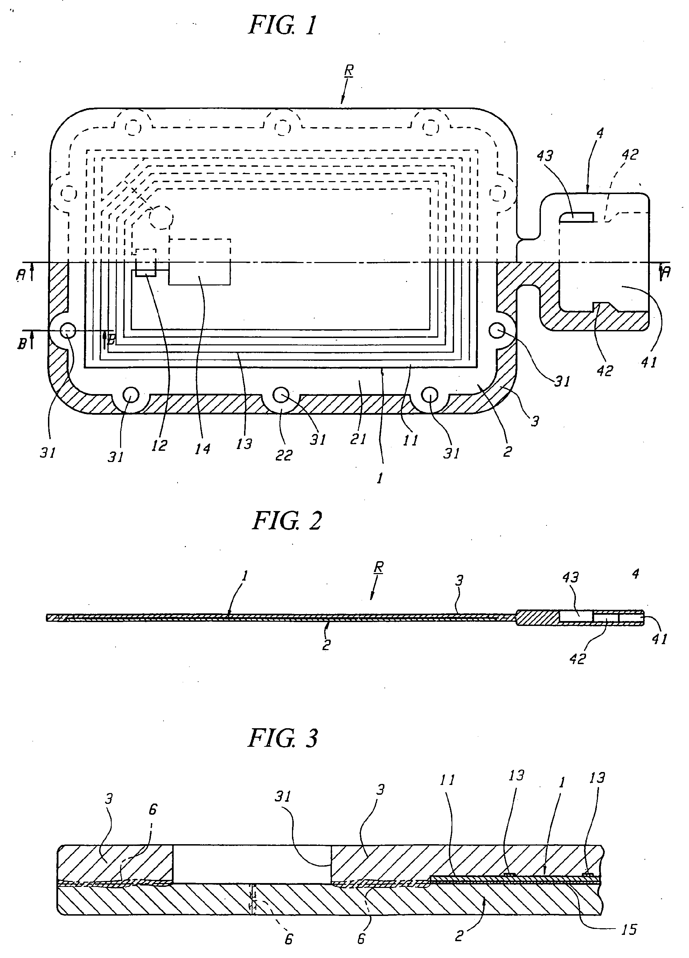

An embodiment of the invention will be described with reference to FIGs. 1 to 8.

A description of an information recording member resin-enclosed tag R is made as follows. That is, an IC tag (information recording member) 1 is formed by disposing an IC chip 12 on a slice of paper or a resin film 11 and providing, through a printing etc., an antenna 13 and a capacitor 14 that is used only in the case where the IC tag is of an electromagnetic induction type. A rear surface of the film 11 in the IC tag 1 is coated with an adhesive agent 15 and, before using the tag, it adheres to an unshown peeling pasteboard.

Further, a substrate 2 in this embodiment is formed by an adhering portion 21 and an expansion portion 22 disposed on an outer peripheral portion of the adhering portion 21, and, for example, is shaped by an adequate means such as an injection molding and a press punching molding using a resin such as polyethylene, polypropylene, polyamide, polyacetal, polycarbonate, denatured polyphenylene ether or polyurethane as a material. The IC tag 1 is attached to the adhering portion 21 of the substrate 2 thus formed, and the IC tag and the adhering portion are covered with an outer packaging body 3. The outer packaging body 3 is formed by a resin material such as polyethylene, polypropylene, polyamide, polyacetal, polycarbonate, denatured polyphenylene ether or polyurethane to be fusion-bonded to the substrate 2 through an injection molding described below. With reference to FIGs. 2 and 3, a positional relation in a thickness direction of the substrate with respect to the outer packaging body 3 is such that a surface opposite to that of the IC tag 1 in the substrate 2 is located at the lowest portion, thereby forming a portion of the outer packaging body 3. Further, an upper portion of the IC tag 1 located on the substrate 2 is covered with the outer packaging body 3. In other words, the IC tag 1 is enclosed in a state sandwiched between the substrate 2 and the outer packing body 3 in its thickness direction.

Note that the information recording member resin-enclosed tag R may adopt a structure, in which the antenna for the IC chip 12 is wound in a coil shape by using a copper wire etc., instead of the structure of the above-mentioned IC tag 1. In this case, the IC tag may be disposed on the adhering portion 21 of the substrate 2 and fixed to the adhering portion by solidifying a resin fused with heat or an adhesive agent coated through flow into the IC tag.

Further, the information recording member resin-enclosed tag R is not limited to the IC tag and may be a simple character information recording member, a one-dimensional bar code recording member, or a second-dimensional code recording member. In these cases, information is generally displayed on paper and/or a resin film by printing etc. and concurrently the recording member adhering to the peeling pasteboard and coated with the adhesive agent on a rear surface of the paper or film may be used.

The information recording member resin-enclosed tag R thus formed is provided with coupling portions having various mechanical shapes depending on applications to attach the tag to other articles. For example, as shown in FIGs. 1 and 2, a boss portion 4 is disposed on the right side of the outer packaging body 3. This boss portion 4 in FIGs. 1 and 2 forms a cavity 41, which is opened at its right end and has a bag shape on its left side. This cavity 41 is provided with protrusions 42, which are opposed to each other and expanded toward its inner side, at upper and lower positions in FIG. 1. Each of these protrusions 42 is formed in a shape of approximating to an inclined plane on an opening side and a vertical plane on an inner side in Figure 1. The boss portion includes a windows 43 formed so that the cavity 42 communicates with the outside.

Note that the boss portion 4 is made from the same resin as that of the outer packaging body 3 and injection-molded integrally with the outer packaging body.

Next, a manufacturing method for the information recording member resin-enclosed tag R and the boss portion 4 will be described.

First, in a first step, by using, for example, a resin such as polyethylene, polypropylene, polyamide, polyacetal, polycarbonate, denatured polyphenylene ether, or polyurethane a material, the substrate 2 is shaped by a press punching, and an injection molding, etc.

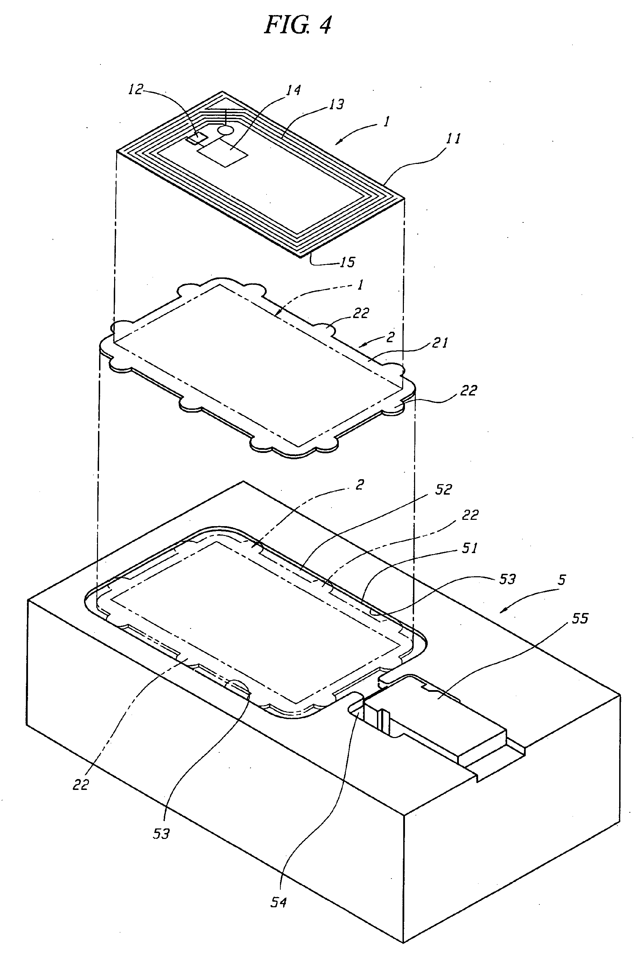

Next, in a second step, the rear surface of the IC tag 1 is coated with the adhesive agent 15 (FIG. 3) and the IC tag adhering to the unshown peeling pasteboard is prepared in advance. Subsequently, the IC tag is peeled from the peeling pasteboard and, as shown by the virtual lines in FIG. 4, is disposed by adhering to a predetermined position of the adhering portion 21 in the substrate 2.

Note that the adhesive agent 15 is advantageous to a method of using an agent adhering to the peeling pasteboard in view of an operation. However, particularly in the cases where the antenna is electrically conducted to the IC chip in a state of not being printed but wounded with a fine copper wiring and where the IC chip is not fixed, the following methods may be used as described above. That is, immediately before the attachment to the substrate 2, a method of coating the IC tag 1 with the adhesive agent 15 and fixing the IC tag to the substrate 2 in advance may be used. Alternatively, a method of forming the film 11 of the IC tag 1 by the resin material fusion-bonded to the substrate 2 and fusion-bonding the film 11 and the substrate 2 with heat may be used. Further, a method of using a double-faced adhesive tape may be used. In addition, if the film 11 is extremely thin and weak in strength, that is, when the protection of the IC tag is not sufficient, it is desirable to reinforce the IC tag by lamination etc. This is because the IC tag endures an injection pressure of a fusible resin as described below and is not deformed. Consequently, needless to say, it is desirable that the attachment of the film 11 to the substrate 2 is strong for the same reason.

In case of using the simple character information recording member, the one-dimensional bar code recording member, or the second-dimensional recording member as the information recording member resin-enclosed tag R, information is generally displayed on paper and/or a resin film by printing etc. and concurrently the recording member adhering to the peeling pasteboard and coated with the adhesive agent on the rear surface of the paper or film may be used.

Subsequently, in a third step, as shown in FIG. 4, the substrate 2 provided with the IC tag 1 is fitted to a cavity 51 of a lower die 5 out of dies for shaping the outer packaging body 3 and the boss portion 4. At this time, in FIG. 4, the substrate 2 is fitted so that the IC tag 1 is used as an upper surface and the substrate 2 contacts with a bottom surface 52 of the cavity 51. In this case, if the expansion portion 22 of the substrate 2 is made to come close to a sidewall surface 53 of the cavity 51, the position of the substrate 2 with respect to the cavity 51 can be maintained.

Meanwhile, an unshown upper die for shaping the entire cavity in conjunction with the lower die 5 is disposed on an opposite surface of the lower die 5 and, by an unshown pin (see pin traces 31 of FIGs. 1 and 3) extending toward the expansion portion 22 from the unshown upper die, the expansion portion 22 is press-contacted with the cavity 51.

Note that the cavity 54 and a slide core 55 are ones for shaping the boss portion 4, the cavity 41, and the protrusions 42.

Now, by joining together the upper and lower dies constituted as described above and by mold-clamping the dies through an unshown injection molding machine, the outer packing body 3 is shaped. This corresponds to a fourth step. A resin material used in this shaping step is, for example, polyethylene, polypropylene, polyamide, polyacetal, polycarbonate, denatured polyphenylene ether, or polyurethane, etc. At this time, a pinpoint gate, a runner, and a sprue are formed on the unshown upper die, and the fusible resin is pressure-filled in the cavity from the pinpoint gate, the runner, and the sprue. When the pinpoint gate is located above the substrate 2, the fusible resin flows in four directions of the IC tag 1 on the substrate. However, since a fusible-resin pressure acts on the IC tag 1 and the substrate 2, the tag and the substrate are pressed to the bottom surface 52 of the cavity 51. All regions in the cavity are filled with the fusible resin having flowed in the four directions in the cavity. Along with the filling, a portion of the substrate 2 is melted due to contact of the substrate 2 and the fusible resin, and the fusible resin and the melted portion of the substrate 2 are solidified by cooling and thereby integration 6 of them is formed (see FIG. 3). When the fusible resin is solidified, it becomes the outer packaging body 3 and the boss portion 4 and if the demolding is carried out after being cooled, the IC tag 1 is enclosed by the substrate 2 and the outer packaging body 3, whereby the information recording member resin-enclosed tag R as shown in FIGs. 1 to 3 is formed.

Note that, as described above, since the substrate 2 is fitted so as to contact with the bottom surface 52 of the cavity 51, the substrate 2 becomes a portion of the outer packing body 3 and therefore the IC tag 1 can be enclosed. Further, when the expansion portions 22 are press-contacted with the cavity 51 by the unshown pins extending toward the protruded portions 22 from the lower die, the fusible resin having flowed into the cavity 51 does not flow between the bottom surface 52 of the cavity 51 and the substrate 2. Therefore, since the substrate 2 forms a portion of an outer packaging surface, an appearance of the entire IC tag becomes preferable. In addition to this, since the substrate 2 and the IC tag are not deformed by a resin pressure, the substrate 2, the IC tag 1, and the outer packaging portion can be made thin and thereby the good-quality information recording member resin-enclosed tag R can be manufactured.

Thus far, the description has been made of a technique capable of enclosing the IC tag 1 even if the substrate 2 and the IC tag are made thin. However, in the case where the information recording member resin-enclosed tag R may be made thick, the substrate 2 or IC tag 1 or both of them is formed thickly and, in a state in which the substrate 2 is floated from the bottom surface 52 of the cavity 51, the fusible resin is made to flow in the cavity and also to flow between the substrate 2 and the bottom surface 52 to form the outer packaging body 3, whereby the substrate 2 and the IC tag 1 may be enwrapped. In this case, it is preferable that a gate is not the above-mentioned pinpoint gate but is set to a side gate or film gate and that it is difficult for the pressure of the fusible resin to act on the substrate 2 floating inside the cavity.

Note that, in order to float the thick substrate 2 from the bottom surface 52 inside the cavity, the following description will be made with reference to FIG. 4. That is, in order to bridge the outside of the cavity from a sidewall surface 53 of the cavity 51, the portion or entirety of the expansion portion 22 is formed into a large size so as to protrude from the sidewall surface 53 of the cavity 51 and each mating surface of the dies corresponding to protrusions of the expansion portions 22 may be provided with a groove, which is formed so as to be fitted to each protrusion.

Next, an installation portion for attaching the information recording member resin-enclosed tag R to other article will be described. This installation portion is provided with coupling portions of various mechanical shapes depending on applications. A several examples thereof will be described below.

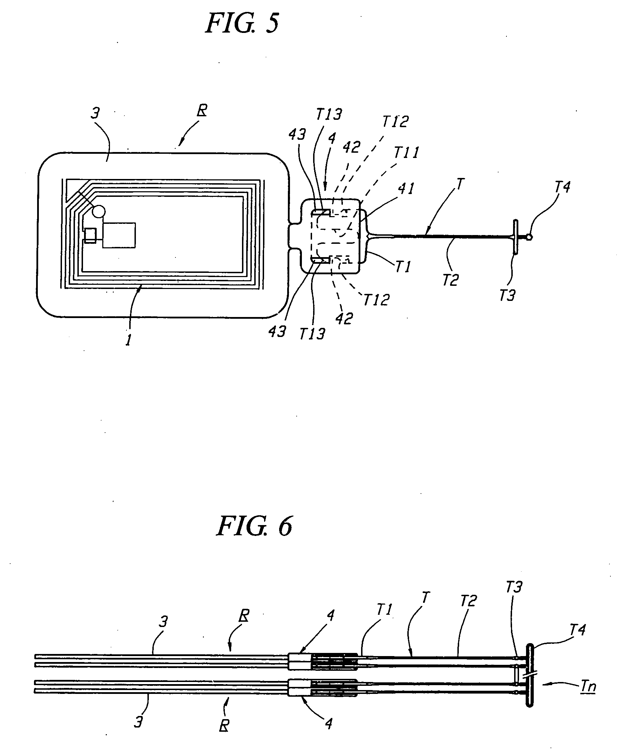

First, one example with reference to FIGs. 5 to 8 will be described. In FIG. 5, a locking piece T generally called a tag pin comprises a head portion T1, a filament T2 extending from this head portion T1, and a cross bar T3 provided on a side opposite to the head portion T1 of the filament T2. As shown in FIG. 6, by standing together a number of locking pieces T on a coupling bar T4, a group of locking pieces Tn are integrally formed by a resin.

The head portion T1 is formed so as to be inserted into the boss portion 4 from the cavity 41 of the boss portion 4 of the information recording member resin-enclosed tag R. That is, a cushion groove T11 is formed in the head portion T1 so as to go along an extension of the filament T2 and, at the same time, locking grooves T12 are formed in regions opposed to the protrusions 42 of the boss portion 4. Further, regions T13 of the heard portion T1, which are disposed at positions corresponding to the windows 43 of the boss portion 4, are obliquely cut to be a chamfer shape.

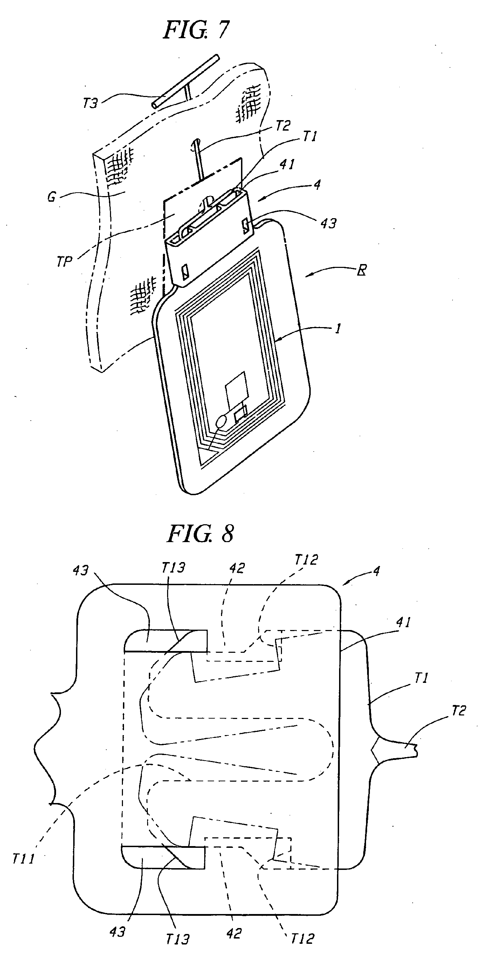

The locking piece T thus formed is knocked in a commodity etc. by an unshown locking-piece attaching machine equipped with a guide needle and formed into a C-shaped section. That is, first, the guide needle of the locking-piece attaching machine is inserted into a commodity G (FIG. 7) and the like, and then the cross bar T3 of the locking piece T is inserted into the guide needle of the locking-piece attaching machine from its rear side. When an end surface of this cross bar T3 is pushed by a push stick, the cross bar T3, namely, the locking piece T moves in a tip direction of the guide needle. When the filament T2 of the locking piece T contacts with the commodity G, the filament T2 becomes in a state parallel to the cross bar T3 advancing inside the guide needle and passes through the commodity G together with the cross bar T3. The cross bar T3, which has passed through the commodity G, is restored to a state shown in FIG. 7 due to elasticity caused in the vicinity of a root of the cross bar T3 and the filament T2, whereby the locking piece T is attached to the commodity G.

As described above, in order to couple the information recording member resin-enclosed tag R to the locking piece T to be attached to the commodity G, the head portion T1 of the locking piece T is inserted into the boss portion 4 of the information recording member resin-enclosed tag R. Operations of the boss portion 4 and the head portion T1 of the locking piece T will be described below with reference to FIGs. 5 to 8. When the head portion T1 is inserted into the boss portion 4 from the cavity 41, the cushion groove T11 is shrunk as shown by the virtual lines of FIG. 8 due to the chamfer regions T13 and opening-side inclined surfaces of the protrusions 42 and the head portion T1 comes into a back of the cavity 41. When the positions of the protrusions 42 and the locking grooves T12 are matched to each other, the head portion T1 returns to the original position by its own elastic force and the protrusions 42 and the locking grooves T12 are in an engagement state. Therefore, the information recording member resin-enclosed tag R and the locking piece T are coupled to each other.

Note that this coupling work operation may be performed so that, before the locking piece T is knocked in the commodity G, as shown in FIGs. 5 and 6, the information recording member resin-enclosed tag R is coupled to the group of locking pieces Tn in advance, or may be performed so as to be coupled after the locking piece T is knocked in the commodity.

Thus, the information recording member resin-enclosed tag R coupled to the commodity G through the locking piece T is used for commodity management and/or commodity information disclosure to consumers. However, as described in the subsection "Background of the Invention", in the case where the information recording member resin-enclosed tag R is an IC tag similarly to the present embodiment, only the information recording member resin-enclosed tag R can be reused by its recovery in view of a situation unable to be introduced due to any cost problems.

By way of one example of a method for such a recovery, the case where the information recording member resin-enclosed tag R coupled to the commodity G as shown in FIG. 7 is recovered at a cash resister of a department store, and a supermarket, etc. will be described below. A customer brings the commodity G into the cash register. At the cash register, when the commodity comes close to the vicinity of a reading device, the reading device automatically reads information on the information recording member resin-enclosed tag R coupled to the commodity and inputs the information to a computer and, concurrently, an amount of money is displayed by the cash register. When payment by the customer is completed, a sales clerk fits an unshown jig or tweezers etc. into the upper and/or lower windows 43 as shown in FIG. 8. By this operation, the chamfer regions T13 of the locking piece T are deformed up to the positions of the illustrated virtual lines and made to be flexible, whereby the engagement between the protrusions 42 and the locking grooves T12 is released. Thereby, the information recording member resin-enclosed tag R can be separated from the locking piece T.

The separated information recording member resin-enclosed tag R is recovered and the information of the tag is rewritten to information on another commodity by an unshown writing device and then the recovered tag is coupled to the another commodity again by the above-described method.

Thus, by the reuse, the cost of the information recording member resin-enclosed tag R can be reduced to such an extent that its own price is divided by the number of times reused and, concurrently, leakage of information desired not to be known to other outlet stores etc., privacy such as after-purchase traces of purchasers, and the like can be prevented.

Note that the locking piece T may be given to the customer in a state of being attached to the commodity G. If there is any need to visually read the commodity information required by the customer, an ordinary paper tag TP as shown in FIG. 7 may be coupled to the commodity G by the locking piece T at a time when the locking piece T is knocked in the commodity G in advance by the conventional method.

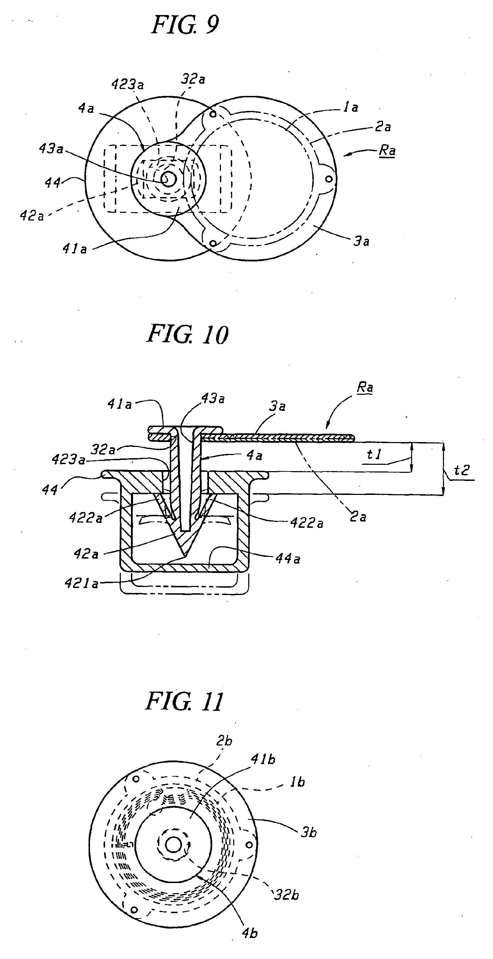

Next, other applicable examples will be described with reference to FIGs. 9 and 10.

First, the IC tag 1 in the above embodiment is formed in a rectangular as shown in FIG. 1, so that the present embodiment is different from the above embodiment in that a tag is formed in a circle. However, since the basic constitution and manufacturing method of the information recording member resin-enclosed tag R remain substantially unchanged, the application examples will be mainly described.

As shown in FIGs. 9 and 10, a hole 32a, which penetrates an outer packaging body 3a, is provided in the vicinity of an IC tag 1a. An enclosed-tag attaching body 4a, which has a collar 41a formed on one end portion and an arrow-head-shaped stopping portion 42a formed on the other end side, is attached in a state of being fitting into the hole 32a.

That is, since the information recording member resin-enclosed tag R is recovered and reused for the above-mentioned reasons, it is formed separately from the attaching body 4a and the coupling of the information recording member resin-enclosed tag R and the attaching body 4a is performed by being attached in the state of fitting the attaching body 4a into the hole 32a.

Since the attaching body 4a is used for attaching the information recording member resin-enclosed tag R to other article, the stopping portion 42a plays roles of inserting the tag into the other article and of stopping the tag being pulled out from the other article after insertion.

A support hole 43a with a bottom is formed in the attaching body 4a from a side of the collar 41a to the stopping portion 42a. This support hole 43a is one for inserting a metal bar etc. into the support hole 43a so that the attaching body 4a can endure a buckling load caused by insertion resistance at a time of inserting the attaching body into the other article.

In the case where the information recording member resin-enclosed tag R thus constituted is inserted to be used as an ear tag for an ear(s) etc. of the animal and/or is used to prevent a high grade apparel commodity etc. from being stolen, since the article to be inserted is soft, a receiving portion 44 is preferably used to make the tag difficult to be pulled out. However, the receiving portion 44 may be not used.

That is, regardless of whether the article to be inserted is soft or hard or porous or nonporous, as shown in FIG. 10, a steeple-shaped arrow-head portion of the stopping portion 42a has blade portions 422a, each of which has a fixed end on a side of a steeple-shaped portion 421a and a free end on a side opposite thereto and which are disposed on right and left sides of the stopping portion 42a. At a time of insertion into the article to be inserted, the blades 422a fall toward a side of the support hole 43a due to resistance of the article to be inserted and thereby are shrunk. When the blades 422a pass through the article to be inserted, the blades 422a open left and right in a direction opposite to the support hole 43a due to elastic forces of the blades 422a themselves.

Consequently, on a side opposite to an inserting side of the attaching body 4a, free ends of the opened blades 422a in the article to be inserted abut against the article to be inserted, so that the attaching body 4a can be prevented from being pulled out from the article to be inserted. In addition thereto, when a force acts on such a direction as to be pulled out from the attaching body 4a, as shown by the virtual lines in FIG. 10, the blades are bent in such a direction as to be further opened and, therefore, as the force is applied to the attaching body, the attaching body becomes difficult to pull out.

In other words, such an operation also has the following effects. That is, in the case where the tag is used as the ear tag of the animal, particularly in the case of attaching the attaching body 4a to the ear of a child animal shortly after birth, even when the ear becomes thick as the animal grows, the blades 422a gradually are bent in accordance with thickness of the ear. Therefore, even if a gap as shown in FIG. 10 changes from t1 to t2, the load applied on the ear to be thick depending on the growth can be reduced.

Note that, in the case of using the receiving portion 44, it is desirable to provide a protective cover 44a in order to prevent the steeple-shaped portion 421a of the stopping portion 42a from damaging or piercing the other articles. Further, the hole 423a, through which the stopping portion 42a of the receiving portion 44 passes, may have a slightly larger diameter than the minimum diameter of the shrunk blade. Alternatively, if the hole can expand and contract to some degrees by being shaped using an elastomer-based resin as a material of the receiving portion 44, the hole may have a diameter slightly smaller than or almost equal to the minimum diameter of the shrunk blade.

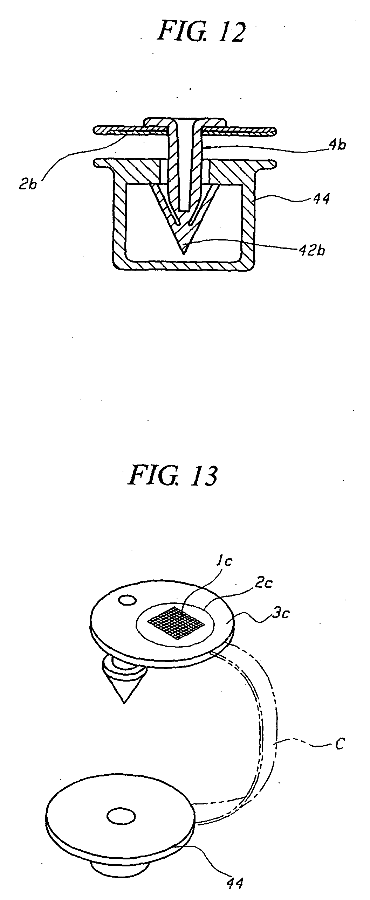

Further, as shown in FIGs. 11 and 12, by providing a hole 32b for penetrating an outer packaging body 3b near the center of a IC tag 1b, an enclosed-tag attaching body 4b that has a collar 41b formed on one end portion and an arrow-head-shaped stopping portion 42b formed on the other end side may be attached in a state of being fitted into the hole 32b.

Note that, in the case of using the receiving portion 44, it may be formed similarly to the receiving portion 44 shown in FIGs. 9 and 10.

Further, as shown in FIG. 13, when the IC tag is not required to be recovered, the outer packaging body 3c enclosing the IC tag and the attaching body 4b may be integrally shaped. As shown in this drawing, instead of the IC tag, the one-dimensional or second-dimensional code label 1c may be enclosed. In addition, as occasion demands, the outer packaging body 3c and the receiving portion 44 may be coupled by a coupling member C.

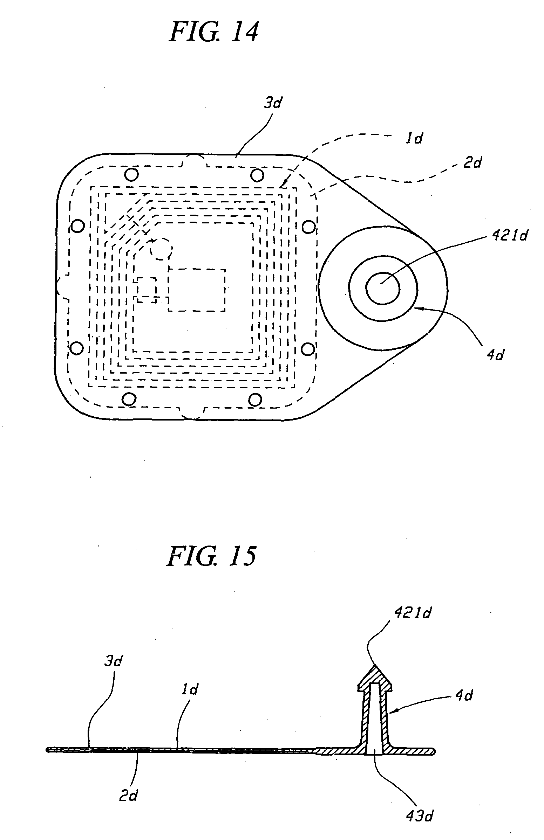

Further, as shown in FIGs. 14 and 15, when the steeple-shaped portion 421d of the attaching body 4d is inserted into the hole of the article to be inserted or of the receiving portion 44, the arrow-head portion may be shrunk toward a side of the support hole 43d by using the cavity of the support hole 43d. Note that, even in the case of the present embodiment, an outer packaging body 3d enclosing an IC tag 1d and an attaching body 4d may be integrally shaped. In addition, the position of the attaching body 4d may be not disposed on an end side of the drawing but disposed near the center of the IC tag 1c although not illustrated.

As other application examples, the IC tag in the present invention can be applied to: a closing device used in the same field (apparel relative field) as that of the locking piece T as shown in FIGs. 5 to 7; a tying band for binding together electric wires etc.; and a tag coupling device of the invention as disclosed in the specification of Japanese Patent Application No. 2003-436553. Therefore, it has an extremely wide range of applications.

As described above, the present invention cannot only enclose the information recording member by the outer packaging body but also be shaped by the injection molding. Therefore, the tags with various shapes can be manufactured. Consequently, the present invention has such effects that the choice available to the attaching methods to the articles to be attached can be broadened and further the information recording member is not affected by dirt etc.

## Claims

1. An information recording member resin-enclosed tag comprising;
a resin substrate provided with at least an information recording member; and
an outer packaging body formed by an injection molding using a resin to be fusion-bonded to the substrate,
wherein said information recording member is covered with said substrate and said outer packaging body.

2. The information recording member resin-enclosed tag according to claim 1, wherein a portion of an outer packaging surface of the outer packaging body is replaced by one surface of the substrate, and the information recording member is disposed on the other surface of said substrate.

3. The information recording member resin-enclosed tag according to claim 1 or 2, wherein the information recording member is formed in a film shape.

4. The information recording member resin-enclosed tag according to any one of claims 1 to 3, wherein the information recording member is attached to the substrate by an adhesive agent.

5. The information recording member resin-enclosed tag according to any one of claims 1 to 4, wherein the substrate and the outer packing body are formed by a resin of the same type of material.

6. The information recording member resin-enclosed tag according to any one of claims 1 to 5, wherein a hole for penetrating the outer packaging body is provided in the vicinity of the information recording member, and an enclosed-tag attaching body having a collar formed in one end portion and a arrow-head-shaped stopping portion formed on the other end side is attached in a state of being fitted into the hole.

7. The information recording member resin-enclosed tag according to claim 6, wherein the information recording member is disposed in an outer peripheral portion, and a hole for being attached in a state of being fitted into the enclosed-tag attaching body is provided inside the information recording member.

8. A method of manufacturing an information recording member resin-enclosed tag, comprising:
a first step of forming a substrate in advance by a resin;
a second step of disposing at least an information recording member on the substrate;
a third step of disposing the substrate provided with the information recording member, inside a cavity of a die which shapes an outer packaging body for covering the information recording member by an injection molding; and
a fourth step of making a fusible resin fusion-bonded to said substrate flow in said cavity to form an outer packaging body covering the information recording member.

9. The method of manufacturing an information recording member resin-enclosed tag according to claim 8, wherein, in the third step, a surface of a side opposite to the information recording member in the substrate provided with the information recording member is brought into contact with a cavity surface of the die.

10. The method of manufacturing an information recording member resin-enclosed tag according to claim 8 or 9, wherein, in the third step, a surface of a side opposite to the information recording member in the substrate provided with the information recording member is pressure-contacted with a cavity surface of the die.

11. The method of manufacturing an information recording member resin-enclosed tag according to any one of claims 8 to 10, wherein, in the second step, the information recording member is attached to the substrate by an adhesive agent.
